# EUROPEAN PATENT SPECIFICATION

(11) **EP 2 152 835 B1**
(45) Date of publication and mention of the grant of the patent: **03.04.2019**
(21) Application number: 08750195.3
(22) Date of filing: 08.05.2008
(51) Int. Cl.: C10L 1/02, C10L 1/19, C10L 10/14, C10L 1/16

(54) **USE OF A FATTY ACID ALKYL ESTER IN DIESEL FUEL COMPOSITIONS COMPRISING A GAS OIL BASE FUEL**
VERWENDUNG EINES FETTSÄUREALKYLESTER IN DIESELKRAFTSTOFFZUSAMMENSETZUNGEN ENTHALTEND EINEN GASÖL-BASISKRAFTSTOFF
UTILISATION D'UN ESTER D'ALKYLE D'UN ACIDE GRAS DANS DES COMPOSITIONS DE GAZOLE COMPRENANT UN GAS OIL DE BASE

(30) Priority: 08.05.2007 EP 07107746; 08.05.2007 EP 07107741
(43) Date of publication of application: 17.02.2010
(73) Proprietor: Shell Internationale Research Maatschappij B.V., 2596 HR The Hague (NL)
(72) Inventor: BREWER, Mark Lawrence, Chester Cheshire CH2 4NU (GB)
(74) Representative: Shell Legal Services IP
(86) International application number: PCT/EP2008/055701
(87) International publication number: WO 2008/135602

(56) References cited:
- US-A- 5 520 708
- ALTIPARMAK DURAN ET AL: "Alternative fuel properties of tall oil fatty acid methyl ester-diesel fuel blends" BIORESOUR. TECHNOL.; BIORESOURCE TECHNOLOGY JANUARY 2007, vol. 98, no. 2, January 2007 (2007-01), pages 241-246, XP002459446
- DUNN R O ET AL: "Improving the low-temperature properties of alternative diesel duels: vegetable oil-derived methyl esters" JOURNAL OF THE AMERICAN OIL CHEMISTS' SOCIETY, AOCS PRESS, CHAMPAIGN, IL, US, vol. 73, no. 12, 1996, pages 1719-1727, XP002979420 ISSN: 0003-021X
- KINAST J A: "Production of Biodiesels from Multiple Feedstocks and Properties of Biodiesels and Biodiesel/Diesel Blends" [Online] March 2003 (2003-03), NATIONAL RENEWABLE ENERGY LABORATORY (US) , XP002459447 Retrieved from the Internet: URL:http://www.nrel.gov/docs/fy03osti/3146 0.pdf> [retrieved on 2009-02-02] pages 26,37
- JOSHI RUSHANG M ET AL: "Flow properties of biodiesel fuel blends at low temperatures" FUEL; FUEL JANUARY 2007, vol. 86, no. 1-2, January 2007 (2007-01), pages 143-151, XP002459501

## Description

The present invention relates to the use of a fatty acid alkyl ester (FAAE) in fuel compositions comprising a gas oil base fuel.

It is known to blend together two different fuel components so as to modify the properties and/or the performance, e.g. engine performance, of the resultant composition.

Known diesel fuel components include the so-called "biofuels" which derive from biological materials. Examples include fatty acid alkyl esters.

Current commercially available compression ignition (diesel) engines tend to be optimised to run on fuels having a desired specification. Moreover, the conditions under which the engine is required to operate can affect the manner in which a fuel composition in the engine will behave. In particular, as the atmospheric temperature falls, a fuel that is a single-phase homogeneous liquid at normal temperatures may become a multiphase liquid as certain components either (i) freeze (forming solid wax) or (ii) become immiscible in the bulk liquid and form a separate liquid layer. The onset of wax formation on cooling is characterised by a change in the transparency of the fuel and the temperature at which this occurs is termed the "Cloud Point" of the fuel. If, on cooling, the Cloud Point is preceded by the formation of a separate liquid phase, the temperature at which this occurs is termed the "Phase separation temperature". Diesel fuel specifications such as ASTM D975-02 (USA) include limits on Cloud Point temperature and EN590 (Europe) includes limits on Cold Filter Plugging Point (CFPP), in order to ensure that diesel fuel remains fluid at the lowest anticipated service temperature and that blocking of fuel filters by wax is prevented. For trouble free operation, it is also desirable that the diesel fuel in the fuel tank remains homogeneous, since the composition of some or all of any separated liquid layers may be unsuitable as a fuel for the engine. The blending of a standard commercial diesel base fuel with other fuel components, to modify the overall fuel properties and/or performance, can therefore have an adverse impact on the performance of the blend in the engines for which it is intended.

For example, Swedish Class 1 diesel fuel has good low temperature properties. Environmental pressure is resulting in the inclusion of FAAEs in such fuels. However, it has been found that this results in adverse effects on such low temperature properties, which can create problems when used in cold climates, such as for example in Scandinavia.

For the above reason, it is desirable for any diesel fuel blend to have an overall specification as close as possible to that of the standard commercially available diesel base fuels for which engines tend to be optimised.

This can, however, be difficult to achieve because any additional fuel component is likely to alter the properties and performance of the base fuel. Moreover, the properties of a blend, in particular its effect on low temperature performance, are not always straightforward to predict from the properties of the constituent fuels alone.

WO-A-2007/012585 describes that in fuel compositions comprising a gas oil base fuel and an alkyl levulinate, the phase separation temperature of the fuel composition is dependent upon the level of aromatic constituents in the base fuel. In particular, it describes that the phase separation temperature is lowered when the level of aromatic constituents is increased. It also describes that, if the level of aromatic constituents is increased, the amount of alkyl levulinate that can be incorporated in a homogeneous mixture is increased.

Altiparmak et al., "Alternative fuel properties of tall oil fatty acid methyl ester-diesel fuel blends", Bioresour. Technol., vol. 98, no. 2, January 2007, pages 241-246, discloses chemical and physical properties, including cloud point, of blends of a tall oil methyl ester and a mineral diesel fuel.

It has now surprisingly been found that, by use of an FAAE selected from a group of FAAEs having particular characteristics, the adverse effects on low temperature properties of the fuel are reduced or removed.

In accordance with the present invention there is provided use of a fatty acid alkyl ester having less than 7% saturation as measured in accordance with EN14103(mod) for the purpose of reducing the phase separation temperature of a fuel composition comprising a gas oil base fuel.

The saturation is preferably less than 6%, more preferably less than 5%, more preferably less than 4%, still more preferably less than 2%, and most preferably less than 1%.

Described herein is use in a fuel composition comprising a gas oil base fuel of a fatty acid alkyl ester having a Cloud Point of less than -5°C, preferably less than -10°C, more preferably less than -15°C, most preferably less than -20°C.

Preferably, the fatty acid alkyl ester used in the present invention contains less than 0.01%m/m, more preferably less than 0.005%m/m, of glycerol, and less than 0.8%m/m, more preferably less than 0.4%m/m, still more preferably less than 0.2%m/m, and most preferably less than 0.1%m/m, of mono-, di- and triglycerides.

The glycerol and mono-, di- and triglycerides are measured in accordance with EN14105.

It is known to include fatty acid alkyl esters (FAAEs), in particular fatty acid methyl esters (FAMEs), in diesel fuel compositions. An example of an FAAE included in diesel fuels is rapeseed methyl ester (RME). FAAEs are typically derivable from biological sources and may be added for a variety of reasons, including to reduce the environmental impact of the fuel production and consumption process or to improve lubricity.

The FAAE will typically be added to the fuel composition as a blend (i.e. a physical mixture), conveniently before the composition is introduced into an internal combustion engine or other system which is to be run on the composition. Other fuel components and/or fuel additives may also be incorporated into the composition, either before or after addition of the FAAE and either before or during use of the composition in a combustion system.

The amount of FAAE added will depend on the natures of the base fuel and FAAE in question and on the target Cloud Point.

FAAEs, of which the most commonly used in the present context are the methyl esters, are already known as renewable diesel fuels (so-called "biodiesel" fuels). They contain long chain carboxylic acid molecules (generally from 10 to 22 carbon atoms long), each having an alcohol molecule attached to one end. Organically derived oils such as vegetable oils (including recycled vegetable oils) and animal fats (including fish oils) can be subjected to a transesterification process with an alcohol (typically a C₁ to C₅ alcohol) to form the corresponding fatty esters, typically mono-alkylated. This process, which is suitably either acid- or base-catalysed, such as with the base KOH, converts the triglycerides contained in the oils into fatty acid esters and free glycerol, by separating the fatty acid components of the oils from their glycerol backbone. FAAEs can also be prepared from used cooking oils, and can be prepared by standard esterification from fatty acids.

In the present invention, the FAAE may be any alkylated fatty acid or mixture of fatty acids. Its fatty acid component(s) are preferably derived from a biological source, more preferably a vegetable source. They may be saturated or unsaturated; if the latter, they may have one or more, preferably up to 6, double bonds. They may be linear or branched, cyclic or polycyclic. Suitably they will have from 6 to 30, preferably 10 to 30, more suitably from 10 to 22 or from 12 to 24 or from 16 to 18, carbon atoms including the acid group(s) -CO₂H. A FAAE will typically comprise a mixture of different fatty acid esters of different chain lengths, depending on its source.

The FAAE used in the present invention is preferably derived from a natural fatty oil, for instance tall oil.

The FAAE is preferably a C₁ to C₅ alkyl ester, more preferably a methyl, ethyl, propyl (suitably iso-propyl)or butyl ester, yet more preferably a methyl or ethyl ester and in particular a methyl ester. It may suitably be the methyl ester of tall oil.

In general it may be either natural or synthetic, refined or unrefined ("crude").

The FAAE may contain impurities or by-products as a result of the manufacturing process.

The FAAE suitably complies with specifications applying to the rest of the fuel composition, and/or to the base fuel to which it is added, bearing in mind the intended use to which the composition is to be put (for example, in which geographical area and at what time of year). In particular, the FAAE preferably has a flash point (IP 34) of greater than 101°C; a kinematic viscosity at 40°C (IP 71) of 1.9 to 6.0 mm²/s, preferably 3.5 to 5.0 mm²/s; a density of 845 to 910 kg/m³, preferably from 860 to 900 kg/m³, at 15°C (IP 365, EN ISO 12185 or EN ISO 3675); a water content (IP 386) of less than 500 ppm; a T95 (the temperature at which 95% of the fuel has evaporated, measured according to IP 123) of less than 360°C; an acid number (IP 139) of less than 0.8 mgKOH/g, preferably less than 0.5 mgKOH/g; and an iodine number (IP 84) of less than 125, preferably less than 120 or less than 115, grams of iodine (I₂) per 100g of fuel. It also preferably contains (e.g. by gas chromatography (GC)) less than 0.2% w/w of free methanol, less than 0.02% w/w of free glycerol and greater than 96.5% w/w esters. In general it may be preferred for the FAAE to conform to the European specification EN 14214 for fatty methyl esters for use as diesel fuels.

Two or more FAAEs may be added to the base fuel in accordance with the present invention, either separately or as a pre-prepared blend.

The FAAE may be added to the fuel composition for one or more further purposes, for instance to reduce life cycle greenhouse gas emissions, to improve lubricity and/or to reduce costs.

In this context, "use" of a FAAE in a fuel composition means incorporating the FAAE into the composition, typically as a blend (i.e. a physical mixture) and optionally with one or more other fuel components (such as diesel base fuels) and optionally with one or more fuel additives. The FAAE is conveniently incorporated before the composition is introduced into an engine or other combustion system which is to be run on the fuel composition. Instead or in addition the use may involve running a diesel engine on the fuel composition containing the FAAE, typically by introducing the composition into a combustion chamber of the engine.

Preferably, said phase separation temperature of said fuel composition is reduced by at least 3°C, more preferably by at least 5°C, still more preferably by at least 10°C, and most preferably by at least 20°C.

Preferably, said phase separation temperature of said fuel composition is below -5°C, more preferably below -10°C, still more preferably below -20°C, and most preferably below -30°C.

Preferably, the Cloud Point of said fuel composition is below -5°C, more preferably below -10°C, more preferably below -15°C, more preferably below -20°C, still more preferably below -25°C, and most preferably below -30°C.

In all aspects of the present invention, blends of two or more of the FAAEs may be included in the fuel composition. In the context of the present invention, selection of the particular components of said blends and their proportions is dependent upon one or more desired characteristics of the fuel composition.

Furthermore, it has been found that the phase separation temperature may be lowered when the level of aromatic constituents is increased. Moreover, at a particular temperature, if the level of aromatic constituents is increased, the amount of a fatty acid alkyl ester that can be incorporated in a homogeneous mixture may be increased.

Thus, a fuel composition described herein may comprise in addition one or more additional components, each of which components contains one or more aromatic constituents. Furthermore, the uses described herein may also comprise the additional use of one or more additional components, each of which components contains one or more aromatic constituents.

Preferably, said additional components are selected from materials which are suitable to be blended with fuel compositions, such as for example (i) a refinery product stream with an aromatic content higher than that of the base fuel, or (ii) an aromatic solvent, e.g. SHELLSOL AB (available ex. Shell companies), boiling in the normal temperature range of gas oil.

The present invention may be used to formulate fuel blends which are expected to be of particular use in modern commercially available diesel engines as alternatives to the standard diesel base fuels, for instance as commercial and legislative pressures favour the use of increasing quantities of organically derived "biofuels".

In the context of the present invention, "use" of a fuel component in a fuel composition means incorporating the component into the composition, typically as a blend (i.e. a physical mixture) with one or more other fuel components, conveniently before the composition is introduced into an engine.

The fuel composition will typically contain a major proportion of the base fuel, such as from 50 to 99%v, preferably from 50 to 98%v, more preferably from 80 to 98%v, most preferably from 90 to 98%v. The proportions of the FAAEs will be chosen to achieve the desired degree of miscibility, i.e. phase separation temperature, and may also be influenced by other properties required of the overall composition.

The fuel compositions to which the present invention relates include diesel fuels for use in automotive compression ignition engines, as well as in other types of engine such as for example marine, railroad and stationary engines, and industrial gas oils for use in heating applications (e.g. boilers).

The base fuel may itself comprise a mixture of two or more different diesel fuel components, and/or be additivated as described below.

Such diesel fuels will contain a base fuel which may typically comprise liquid hydrocarbon middle distillate gas oil(s), for instance petroleum derived gas oils. Such fuels will typically have boiling points within the usual diesel range of 150 to 400°C, depending on grade and use. They will typically have a density from 750 to 900 kg/m³, preferably from 800 to 860 kg/m³, at 15°C (e.g. ASTM D4502 or IP 365) and a cetane number (ASTM D613) of from 35 to 80, more preferably from 40 to 75. They will typically have an initial boiling point in the range 150 to 230°C and a final boiling point in the range 290 to 400°C. Their kinematic viscosity at 40°C (ASTM D445) might suitably be from 1.2 to 4.5 mm²/s.

An example of a petroleum derived gas oil is a Swedish Class 1 base fuel, which will have a density from 800 to 820 kg/m³ at 15°C (ASTM D4502 or IP 365), a T95 of 285°C or less (ASTM D86 or IP 123) and a kinematic viscosity at 40°C (ASTM D445) from 1.2 to 4.0 mm²/s, as defined by the Swedish national specification EC1.

Such industrial gas oils will contain a base fuel which may comprise fuel fractions such as the kerosene or gas oil fractions obtained in traditional refinery processes, which upgrade crude petroleum feedstock to useful products. Preferably such fractions contain components having carbon numbers in the range 5 to 40, more preferably 5 to 31, yet more preferably 6 to 25, most preferably 9 to 25, and such fractions have a density at 15°C of 650 to 1000 kg/m³, a kinematic viscosity at 20°C of 1 to 80 mm²/s, and a boiling range of 150 to 400°C.

Kerosene fuels will typically have boiling points within the usual kerosene range of 130 to 300°C, depending on grade and use. They will typically have a density from 775 to 840 kg/m³, preferably from 780 to 830 kg/m³, at 15°C (e.g. ASTM D4502 or IP 365). They will typically have an initial boiling point in the range 130 to 160°C and a final boiling point in the range 220 to 300°C. Their kinematic viscosity at -20°C (ASTM D445) might suitably be from 1.2 to 8.0 mm²/s.

Optionally, non-mineral oil based fuels, such as biofuels or Fischer-Tropsch derived fuels, may also form or be present in the fuel composition. Such Fischer-Tropsch fuels may for example be derived from natural gas, natural gas liquids, petroleum or shale oil, petroleum or shale oil processing residues, coal or biomass.

The amount of Fischer-Tropsch derived fuel used in a diesel fuel composition may be from 0.5 to 100%v of the overall diesel fuel composition, preferably from 5 to 75%v. It may be desirable for the composition to contain 10%v or greater, more preferably 20%v or greater, still more preferably 30%v or greater, of the Fischer-Tropsch derived fuel. It is particularly preferred for the composition to contain 30 to 75%v, and particularly 30 or 70%v, of the Fischer-Tropsch derived fuel. The balance of the fuel composition is made up of one or more other fuels.

An industrial gas oil composition will preferably comprise more than 50 wt%, more preferably more than 70 wt%, of a Fischer-Tropsch derived fuel component.

Such a Fischer-Tropsch derived fuel component is any fraction of the middle distillate fuel range, which can be isolated from the (hydrocracked) Fischer-Tropsch synthesis product. Typical fractions will boil in the naphtha, kerosene or gas oil range. Preferably, a Fischer-Tropsch product boiling in the kerosene or gas oil range is used because these products are easier to handle in for example domestic environments. Such products will suitably comprise a fraction larger than 90 wt% which boils between 160 and 400°C, preferably to about 370°C. Examples of Fischer-Tropsch derived kerosene and gas oils are described in EP-A-0583836, WO-A-97/14768, WO-A-97/14769, WO-A-00/11116, WO-A-00/11117, WO-A-01/83406, WO-A-01/83648, WO-A-01/83647, WO-A-01/83641, WO-A-00/20535, WO-A-00/20534, EP-A-1101813, US-A-5766274, US-A-5378348, US-A-5888376 and US-A-6204426.

The Fischer-Tropsch product will suitably contain more than 80 wt% and more suitably more than 95 wt% iso and normal paraffins and less than 1 wt% aromatics, the balance being naphthenics compounds. The content of sulphur and nitrogen will be very low and normally below the detection limits for such compounds. For this reason the sulphur content of a fuel composition containing a Fischer-Tropsch product may be very low.

The fuel composition preferably contains no more than 5000ppmw sulphur, more preferably no more than 500ppmw, or no more than 350ppmw, or no more than 150ppmw, or no more than 100ppmw, or no more than 70ppmw, or no more than 50ppmw, or no more than 30ppmw, or no more than 20ppmw, or most preferably no more than 10ppmw sulphur.

In addition to the FAAEs, the fuel composition described herein may, if required, contain one or more additives as described below.

The base fuel may itself be additivated (additive-containing) or unadditivated (additive-free). If additivated, e.g. at the refinery, it will contain minor amounts of one or more additives selected for example from anti-static agents, pipeline drag reducers, flow improvers (e.g. ethylene/vinyl acetate copolymers or acrylate/maleic anhydride copolymers), lubricity additives, antioxidants and wax anti-settling agents.

Detergent-containing diesel fuel additives are known and commercially available. Such additives may be added to diesel fuels at levels intended to reduce, remove, or slow the build up of engine deposits.

Examples of detergents suitable for use in fuel additives for the present purpose include polyolefin substituted succinimides or succinamides of polyamines, for instance polyisobutylene succinimides or polyisobutylene amine succinamides, aliphatic amines, Mannich bases or amines and polyolefin (e.g. polyisobutylene) maleic anhydrides. Succinimide dispersant additives are described for example in GB-A-960493, EP-A-0147240, EP-A-0482253, EP-A-0613938, EP-A-0557516 and WO-A-98/42808. Particularly preferred are polyolefin substituted succinimides such as polyisobutylene succinimides.

The additive may contain other components in addition to the detergent. Examples are lubricity enhancers; dehazers, e.g. alkoxylated phenol formaldehyde polymers; anti-foaming agents (e.g. polyether-modified polysiloxanes); ignition improvers (cetane improvers) (e.g. 2-ethylhexyl nitrate (EHN), cyclohexyl nitrate, di-tert-butyl peroxide and those disclosed in US-A-4208190 at column 2, line 27 to column 3, line 21); anti-rust agents (e.g. a propane-1,2-diol semi-ester of tetrapropenyl succinic acid, or polyhydric alcohol esters of a succinic acid derivative, the succinic acid derivative having on at least one of its alpha-carbon atoms an unsubstituted or substituted aliphatic hydrocarbon group containing from 20 to 500 carbon atoms, e.g. the pentaerythritol diester of polyisobutylene-substituted succinic acid); corrosion inhibitors; reodorants; anti-wear additives; anti-oxidants (e.g. phenolics such as 2,6-di-tert-butylphenol, or phenylenediamines such as N,N'-di-sec-butyl-p-phenylenediamine); metal deactivators; and combustion improvers.

The additive may contain a lubricity enhancer, especially when the fuel composition has a low (e.g. 500 ppmw or less) sulphur content. In the additivated fuel composition, the lubricity enhancer is conveniently present at a concentration of less than 1000 ppmw, preferably between 50 and 1000 ppmw, more preferably between 100 and 1000 ppmw. Suitable commercially available lubricity enhancers include ester- and acid-based additives. Other lubricity enhancers are described in the patent literature, in particular in connection with their use in low sulphur content diesel fuels, for example in:
- the paper by Danping Wei and H.A. Spikes, "The Lubricity of Diesel Fuels", Wear, III (1986) 217-235;
- WO-A-95/33805 - cold flow improvers to enhance lubricity of low sulphur fuels;
- WO-A-94/17160 - certain esters of a carboxylic acid and an alcohol wherein the acid has from 2 to 50 carbon atoms and the alcohol has 1 or more carbon atoms, particularly glycerol monooleate and di-isodecyl adipate, as fuel additives for wear reduction in a diesel engine injection system;
- US-A-5490864 - certain dithiophosphoric diester-dialcohols as anti-wear lubricity additives for low sulphur diesel fuels; and
- WO-A-98/01516 - certain alkyl aromatic compounds having at least one carboxyl group attached to their aromatic nuclei, to confer anti-wear lubricity effects particularly in low sulphur diesel fuels.

It is also preferred that the additive contain an anti-foaming agent, more preferably in combination with an anti-rust agent and/or a corrosion inhibitor and/or a lubricity additive.

Unless otherwise stated, the (active matter) concentration of each such additional component in the additivated fuel composition is preferably up to 10000 ppmw, more preferably in the range from 0.1 to 1000 ppmw, advantageously from 0.1 to 300 ppmw, such as from 0.1 to 150 ppmw.

The (active matter) concentration of any dehazer in the fuel composition will preferably be in the range from 0.1 to 20 ppmw, more preferably from 1 to 15 ppmw, still more preferably from 1 to 10 ppmw, advantageously from 1 to 5 ppmw. The (active matter) concentration of any ignition improver present will preferably be 2600 ppmw or less, more preferably 2000 ppmw or less, conveniently from 300 to 1500 ppmw.

If desired, the additive components, as listed above, may be co-mixed, preferably together with suitable diluent(s), in an additive concentrate, and the additive concentrate may be dispersed into the fuel, in suitable quantity to result in a composition described herein.

In the case of a diesel fuel composition, for example, the additive will typically contain a detergent, optionally together with other components as described above, and a diesel fuel-compatible diluent, which may be a carrier oil (e.g. a mineral oil), a polyether, which may be capped or uncapped, a non-polar solvent such as toluene, xylene, white spirits and those sold by Shell companies under the trade mark "SHELLSOL", and/or a polar solvent such as an ester and, in particular, an alcohol, e.g. hexanol, 2-ethylhexanol, decanol, isotridecanol and alcohol mixtures such as those sold by Shell companies under the trade mark "LINEVOL", especially LINEVOL 79 alcohol which is a mixture of C₇₋₉ primary alcohols, or a C₁₂₋₁₄ alcohol mixture which is commercially available.

The total content of the additives may be suitably between 0 and 10000 ppmw and preferably below 5000 ppmw.

Preferably, the fatty acid alkyl ester concentration in the fuel composition accords with one or more of the *following parameters:-
(i) at least 1%v; (ii) at least 2%v; (iii) at least 3%v; (iv) at least 4%v; (v) at least 5%v; (vi) up to 6%v; (vii) up to 8%v; (viii) up to 10%v, (xi) up to 12%v, (x) up to 35%v, with ranges having features (i) and (x), (ii) and (ix), (iii) and (viii), (iv) and (vii), and (v) and (vi) respectively being progressively more preferred. The range having features (v) and (viii) is also preferred.

In this specification, amounts (concentrations, %v, ppmw, wt%) of components are of active matter, i.e. exclusive of volatile solvents/diluent materials.

The present invention is particularly applicable where the fuel composition is used or intended to be used in a direct injection diesel engine, for example of the rotary pump, in-line pump, unit pump, electronic unit injector or common rail type, or in an indirect injection diesel engine. The fuel composition may be suitable for use in heavy and/or light duty diesel engines.

It is also applicable where the fuel composition is used in heating applications, for example boilers. Such boilers include standard boilers, low temperature boilers and condensing boilers, and are typically used for heating water for commercial or domestic applications such as space heating and water heating.

The present invention may lead to any of a number of advantageous effects, including good engine low temperature performance.

The present invention will now be further described by reference to the following Examples, in which, unless otherwise indicated, parts and percentages are by weight, and temperatures are in degrees Celsius:

Fuels were blended with additives by adding said additives to base fuel at ambient temperature (20°C) and homogenising.

The following additives were used:-tall oil methyl ester (TallME), which has 4.89% saturation, and contains <0.01%m/m of glycerol and a total of 0.22%m/m mono-, di- and triglycerides; and has a cloud point of -20°C;
rapeseed methyl ester (RME), which has 7.4% saturation, and contains <0.01%m/m of glycerol and a total of 0.49%m/m of mono-, di- and triglycerides; and has a cloud point of -4°C;
tallow methyl ester (TME), which has 45.18% saturation, and contains 0.01%m/m of glycerol and a total of 0.03%m/m of mono-, di- and triglycerides; and has a cloud point of 14.3°C; and
palm oil methyl ester (POME), which has 41.5% saturation, and contains <0.01%m/m of glycerol and a total of 0.22%m/m of mono-, di- or triglycerides; and has a cloud point of 12°C.

### Examples

The base fuel tested was a Swedish Class 1 AGO, which is a low density, low aromatics (4%m) diesel fuel with a cloud point of -35.1°C. This base fuel met the EN590 specification.

The properties of the base fuel are given in Table 1, together with the specification for Swedish Class I AGO:

**Table 1**

| | Fuel | Specification |
|---|---|---|
| Density @ 15°C, kg/m³ | 815 | 800-820 |
| Initial boiling point, °C | - | ≤180 |
| Distillation T50, °C | 235 | - |
| Distillation T95, °C | 272 | ≤285 |
| Viscosity @40°C, mm²/s | 2.03 | 1.2-4.0 |
| Sulphur, mg/kg | <5 | ≤10 |
| Cloud Point, °C | -35.1 | ≤-16 |
| CFPP, °C | -36.0 | ≤-26 |
| Aromatics, %m | 4 | ≤5 |

The miscibility of various FAAEs was measured in terms of "Cloud Point" (in accordance with IP219).

A sample of fuel (40 ml) was cooled from ambient temperature (20°C) in a series of thermostat baths maintained at progressively lower temperatures. The sample was examined at 1°C intervals as it cooled to its wax cloud point. Other methods also can be used to determine Cloud Point.

Solutions of the esters TallME, RME, TME and POME (which can be referred to as fatty acid methyl esters (FAMEs)) were blended into the base fuel at various concentrations and the miscibility of each blend was measured, in terms of the Cloud Point. The results are shown in Table 2 below:

**Table 2**

| | TallME | RME | TME | POME |
|---|---|---|---|---|
| 0% | -35.1 | -35.1 | -35.1 | -35.1 |
| 2% | -36.5 | nd | -30.4 | -31.5 |
| 5% | -36.4 | -30.8 | -22.5 | -21.6 |
| 10% | -35.0 | -31.0 | -14.7 | nd |

| | | | | |
|---|---|---|---|---|
| nd = not determined | | | | |

Table 2 shows that the Cloud Point of the fuel was essentially unchanged, or even reduced, as the TallME was added, e.g. whilst the Cloud Point of the base fuel was -35.1°C, that of the fuel composition containing 5%wt of TallME was reduced to -36.4°C and of that containing 10%wt TallME was -35.0°C. In contrast, the Cloud Points of the fuel compositions containing 5%wt of RME, TME and POME were increased to -30.8°C, -22.5°C and -21.6°C respectively.

Solutions of the esters TallME, RME, TME and POME were blended into an aromatic solvent "SHELLSOL AB" (ex. Shell), as representative of a base fuel, at various concentrations, and the miscibility of each blend was measured, in terms of the Cloud Point. The results are shown in Table 3 below:

**Table 3**

| | TallME | RME | TME | POME |
|---|---|---|---|---|
| 0% | -68.6 | -68.6 | -68.6 | -68.6 |
| 1% | nd | -70.1 | -61.9 | -62.0 |
| 2% | -67.0 | -68.8 | -51.7 | -53.2 |
| 3% | nd | -65.7 | -45.0 | -43.7 |
| 5% | -70.3 | -63.3 | -41.4 | -37.5 |
| 10% | -68.5 | -58.8 | -31.5 | -24.2 |

| | | | | |
|---|---|---|---|---|
| nd = not determined | | | | |

Table 3 shows that the Cloud Point of the blend was essentially unchanged, or even reduced, as the TallME was added, e.g. whilst the Cloud Point of the aromatic solvent was -68.6°C, that of the fuel composition containing 5%wt of TallME was reduced to -70.3°C and of that containing 10%wt TallME was -68.5°C. In contrast, the Cloud Points of the blends containing 10%wt of RME, TME and POME were increased to -58.8°C, -31.5°C and -24.2°C respectively. This shows that even for a blend having a high aromatic content and very low Cloud Point, the use of TallME still has a very advantageous effect as compared to the other FAMEs tested.

Low temperature stability can be measured by storing a sample isothermally for prolonged periods (e.g. 24 hours to 4 weeks) and performing visual observations at regular intervals.

## Claims

1. Use of a fatty acid alkyl ester having less than 7% saturation, as measured in accordance with EN14103(mod.), for the purpose of reducing the phase separation temperature of a fuel composition comprising a gas oil base fuel.

2. The use of claim 1, wherein the fuel composition comprises a major proportion of gas oil base fuel.

3. The use of claim 2, wherein the fuel composition comprises a gas oil base fuel in a proportion from 80 to 98%v, preferably from 90 to 98%v with respect to the total volume of the fuel composition.

## Patentansprüche

1. Verwendung eines Fettsäurealkylesters mit einer Sättigung von weniger als 7 %, gemessen gemäß EN 14103 (mod.), zum Zwecke der Verringerung der Phasentrennungstemperatur einer Kraftstoffzusammensetzung, die einen Kraftstoff auf Gasölbasis umfasst.

2. Verwendung nach Anspruch 1, wobei die Kraftstoffzusammensetzung einen Hauptanteil von Kraftstoff auf Gasölbasis umfasst.

3. Verwendung nach Anspruch 2, wobei die Kraftstoffzusammensetzung einen Kraftstoff auf Gasölbasis in einem Anteil von 80 bis 98 Vol.-%, vorzugsweise von 90 bis 98 Vol.-%, bezogen auf das Gesamtvolumen der Kraftstoffzusammensetzung, umfasst.

## Revendications

1. Utilisation d'un ester d'alkyle d'acide gras à saturation inférieure à 7 %, telle que mesurée conformément à la norme EN14103(mod.), afin de réduire la température de démixtion d'une composition de carburant contenant un carburant à base de gazole.

2. Utilisation de la revendication 1, la composition de carburant comprenant une proportion majeure de carburant à base de gazole.

3. Utilisation de la revendication 2, la composition de carburant comprenant une proportion de carburant à base de gazole de 80 à 98 % en volume, de préférence de 90 à 98 % en volume, par rapport au volume total de la composition de carburant.
